# EUROPÄISCHE PATENTSCHRIFT

(11) **EP 2 170 651 B1**
(45) Veröffentlichungstag und Bekanntmachung des Hinweises auf die Patenterteilung: **11.07.2012**
(21) Anmeldenummer: 08750157.3
(22) Anmeldetag: 07.05.2008
(51) Int. Cl.: B60Q 1/48, B62D 15/02

(54) **STEUEREINRICHTUNG UND VERFAHREN ZUR DARSTELLUNG EINER PARKLÜCKE**
CONTROL DEVICE AND METHOD FOR REPRESENTING A PARKING SPACE
DISPOSITIF DE DIRECTION ET PROCÉDÉ POUR REPRÉSENTER UN CRÉNEAU

(30) Priorität: 21.06.2007 DE 102007028517
(43) Veröffentlichungstag der Anmeldung: 07.04.2010
(73) Patentinhaber: Robert Bosch GmbH, 70442 Stuttgart (DE)
(72) Erfinder: SCHOENHERR, Michael, 70190 Stuttgart (DE); HECKEL, Joerg, 71277 Rutesheim (DE); PAMPUS, Christian, 70825 Korntal-Muenchingen (DE); LEHNER, Philipp, 75417 Muehlacker (DE)
(86) Internationale Anmeldenummer: PCT/EP2008/055639
(87) Internationale Veröffentlichungsnummer: WO 2008/155167

(56) Entgegenhaltungen:
- EP-A- 1 094 337
- EP-A2- 2 003 021
- DE-A1- 10 250 021
- GB-A- 2 357 743
- JP-A- 2001 010 427
- JP-A- 2005 335 568
- US-A1- 2005 033 495

## Beschreibung

### Stand der Technik

Die Erfindung geht aus von einer Steuereinrichtung oder einem Verfahren zur Darstellung einer Parklücke nach Gattung der unabhängigen Ansprüche. Aus der EP 1 462 342 A2 ist bereits ein Parkassistenzvorrichtung und ein Einparkverfahren bekannt, bei dem eine Umgebung des Fahrzeugs mit einer Kamera erfasst wird. Eine Zielparkposition innerhalb einer Parklücke, zu der eine Zielführung erfolgen soll, kann mittels Pfeiltasten in der Anzeige verschoben werden.

Ein System zur Einparkhilfe ist aus EP 1 094 337 A2 bekannt.

### Offenbarung der Erfindung

### Vorteile der Erfindung

Die erfindungsgemäße Steuereinrichtung mit den Merkmalen des unabhängigen Anspruchs hat demgegenüber den Vorteil, dass die erfassten Begrenzungen einer Parklücke einem Benutzer in der Anzeige symbolisch dargestellt werden. Hierdurch kann der Benutzer erkennen, dass eine Sensoreinrichtung des Fahrzeugs zur Erfassung einer Parklücke die Abmaße der Parklücke zutreffend erfasst hat und somit eine Zielführung in die Parklücke ohne einen Zusammenstoß während des Einparkens in die Parklücke oder bei einem Abschluss des Einparkvorgangs erfolgen kann. Ein Benutzer kann ebenfalls erkennen, wenn Scheinhindernisse die Parklücke zu klein erscheinen lassen. Wurde eine Parklücke unzutreffend erfasst, kann der Fahrer, nachdem er dies erkannt hat, gegebenenfalls den Parklücken-Abmessvorgang wiederholen. Insbesondere trägt eine symbolische Darstellung der erfassten Parklückenbegrenzungen auch zu einem subjektiven Sicherheitsempfinden des Fahrers bei, da der Fahrer nun eine zuverlässig durchgeführte Parklückenvermessung erkennen kann und er sich daher besser auf sein Unterstützungssystem für den Einparkvorgang verlassen kann.

Durch die in den abhängigen Ansprüchen aufgeführten Maßnahmen sind vorteilhafte Weiterbildungen und Verbesserungen der in dem unabhängigen Anspruch angegebenen Steuereinrichtung möglich. So ist es vorteilhaft, eine Schnittstelle zu einer Eingabeeinheit vorzusehen, über die der Nutzer eine erfasste Begrenzung der Parklücke korrigieren kann. Insbesondere ist es hierbei auf einfache Weise möglich, eine erfasste Begrenzung einer Parklücke in einer Anzeigendarstellung zu verschieben. Somit kann ein Benutzer die auf der Basis von Sensoren erfasste Parklückengröße korrigieren, indem er durch eine Verschiebung der in der Anzeige dargestellten Symbole entweder die Parklücke vergrößert oder verkleinert. Ferner kann der Benutzer durch ein Verschieben einer Begrenzung auch einen Ort einer Begrenzung selbst festlegen, falls keine Erfassung möglich war oder durchgeführt wurde. Hierdurch kann gegebenenfalls auf eine erste oder auf eine wiederholte Durchführung eines Parklücken-Vermessungsvorgangs verzichtet werden. Durch eine Zuordnung der Symbole zu einer Fahrzeugumgebung in dem Kamerabild hat der Benutzer zudem eine gute Rückmeldung darüber, auf welche Weise eine Position einer Begrenzung verändert wird.

Weiterhin ist es vorteilhaft, einen Benutzer für den Fall zu warnen, dass eine korrigierte Parklücke nunmehr für einen Einparkvorgang zu klein ist. Dies ist insbesondere dann vorteilhaft, wenn die erfasste Parklücke noch groß genug für einen Einparkvorgang gewesen wäre, nach der Anpassung an die tatsächlichen Verhältnisse infolge einer Korrektur durch den Fahrer die Parklücke jedoch für ein Einparken zu klein ist. Hierdurch kann ein nicht erfolgreicher Einparkvorgang verhindert werden.

Ferner ist es vorteilhaft, insbesondere die seitlichen Begrenzungen einer Parklücke mittels einer rechnerisch auf die Fahrbahn projizierten Linie in einem erfassten Bild der Kamera darzustellen. Eine derartige Darstellung ist besonders eingängig, da im Allgemeinen Parklücken ansonsten mittels auf eine Fahrbahn aufgebrachten Linien abgeteilt werden und somit eine entsprechende Linienbegrenzung für einen Fahrer leicht verständlich ist.

Ferner ist es vorteilhaft, die Ecken einer Parklücke durch ein gesondertes Symbol hervorzuheben. Denn insbesondere die Erfassung von Ecken von Hindernissen kann ungenau sein, da hier Fehler in zwei Raumrichtungen berücksichtigt werden müssen. Im Allgemeinen ist zudem davon auszugehen, dass bei einer korrekten Festlegung der Ecken-Positionen auch die übrigen Abmaße der Parklücke mit hoher Wahrscheinlichkeit sicher erfasst werden können. Zudem ist auch die Eckenposition mit einer entsprechenden Darstellung in dem Anzeigebild für einen Benutzer leicht erfassbar, beispielsweise durch ein Symbol in Form einer senkrechten Linie zu einer Fahrbahnoberfläche.

Vorteilhaft ist die Verwendung einer erfindungsgemäßen Steuereinrichtung insbesondere in Zusammenhang mit einer Kamera, die auf einen rückwärtigen Fahrraum eines Fahrzeugs gerichtet ist, da der rückwärtige Fahrraum von einem Fahrer eines Fahrzeugs im Allgemeinen schlecht einsehbar ist

Es ist ferner vorteilhaft zusätzlich auch ein Symbol für eine Zielposition einer berechneten Einparktrajektorie bzw. die Einparktrajektorie selbst in einer Anzeige darzustellen. Hiermit kann ein Fahrer den Verlauf der Einparktrajektorie und die Zielposition des Einparkvorgangs in einen direkten, optischen Bezug zu den erfassten Begrenzungen der Parklücke setzen. Insbesondere kann dadurch sehr schnell erfasst werden, ob sich in dem Weg des Fahrzeugs ein Hindernis bis zu der Zielposition befindet.

Entsprechende Vorteile ergeben sich für ein erfindungsgemäßes Verfahren zur Darstellung einer Parklücke mit entsprechenden Ausgestaltungen des Darstellungsverfahrens.

### Ausführungsformen der Erfindung

Die erfindungsgemäße Steuereinrichtung ist vorzugsweise für ein Kraftfahrzeug anwendbar, das in einem Straßenraum geparkt werden soll, wobei eine erste Kamera eine Vorderseite des Fahrzeugs und eine zweite Kamera eine Rückseite des Fahrzeugs überwacht. Die Kameras sind bevorzugt als Weitwinkelkameras ausgeführt, die ein möglichst großen Blickwinkelbereich der Fahrzeugumgebung aufnehmen. Die Kameras sind mit einer erfindungsgemäßen Steuereinrichtung verbunden, wobei die erste Kamera an eine erste Schnittstelle und die zweite Kamera an eine zweite Schnittstelle 6 der Steuereinrichtung angeschlossen sind. Die Kameras nehmen jeweils ein Bild der Fahrzeugumgebung zur weiteren Verarbeitung der empfangenen Bilddaten in der Steuereinrichtung auf. Zur Verarbeitung weist die Steuereinrichtung eine Recheneinheit auf, die die empfangenen Bilddaten weiterverarbeitet. Insbesondere werden die empfangenen Bilddaten so aufbereitet, dass sie in einer Anzeige im Fahrzeug dargestellt werden können. Es kann entweder eine Kamera für den vorderen oder den hinteren Fahrzeugfahrraum, aber auch für beide Fahrzeugbereiche am Fahrzeug vorgesehen sein. Je nach Auswahl durch einen Benutzer können dann entweder belde Fahrzeugfahrräume oder nur ein ausgewählter Fahrzeugfahrraum in der Anzeige 8 dargestellt werden.

In einer ersten Ausführungsform können die Kameras auch zu einer Bildauswertung der Fahrzeugumgebung ausgestattet sein. Durch eine Auswertung der empfangenen Bildinformationen, beispielsweise durch eine Stereobildauswertung oder durch einen Vergleich mit gespeicherten Bildmustern, kann gemäß dieser Ausführungsform ein Umgebungsbild des Fahrzeugs anhand der von den Kameras jeweils erfassten Bildern erfasst werden und die Positionen von Hindernissen in der Fahrtzeugumgebung können bestimmt werden.

In einer weiteren Ausführungsform wird jedoch ein Model einer Fahrzeugumgebung mittels Abstandsensoren ermittelt, die an dem Fahrzeug angeordnet sind. Die Abstandssensoren können beispielsweise als optische Sensoren, als Radarsensoren oder als Ultraschallsensoren ausgeführt sein. Bevorzugt ist hierzu möglichst an jeder Fahrzeugsseite wenigstens ein Sensor angeordnet. Beispielsweise sind an der rechten Fahrzeugseite zwei Sensoren, an der linken Fahrzeugsseite zwei Sensoren, an der Fahrzeugvorderseite vier Sensoren und entsprechend an der Fahrzeugrückseite ebenfalls vier Sensoren angeordnet. Die Sensoren sind über einen Datenbus mit einer Schnittstelle der Steuereinrichtung verbunden. Bevorzugt werden die Sensoren von der Steuereinrichtung angesteuert und die Messergebnisse werden auch von der Steuereinrichtung ausgewertet. Aus den ermittelten Abstandsinformationen zu Hindernissen in der Fahrzeugumgebung wird rechnerisch ein Umgebungsmodel des Fahrzeugs bestimmt. Bevorzugt wird hierzu zusätzlich auf einen Wegsensor zugegriffen, der beispielsweise aus einer Reifenumdrehung des Fahrzeugs eine zurückgelegte Wegstrecke bestimmt, sodass die ermittelten Abstände zu Hindernissen in der Umgebung des Fahrzeugs in Relationen zu einer Fahrstrecke des Fahrzeugs gesetzt werden können. Fährt das Fahrzeug an einer Parklücke an der rechten Fahrzeugseite vorbei, können beispielsweise die an der rechten Fahrzeugseite angeordneten Sensoren Begrenzungen der Parklücke erfassen. Aus dem Abstand des Fahrzeugs zu den Hindernissen in Bezug zu einer Position des Fahrzeugs ist es damit der Steuereinrichtung mittels der Recheneinheit möglich, die erfassten Positionen von Hindernissen in Bezug zu den Bilddaten zu setzen, die von den Kameras erfasst werden. Durch eine Abbildung der sensorisch erfassten Umgebung des Fahrzeugs mittels einer Zuordnung zur Position des Fahrzeugs können damit Informationen über die Hindernisse in ein Bild der Fahrzeugumgebung eingetragen werden. Ist das Fahrzeug beispielsweise an einer Parklücke derart vorbeigefahren, dass die Parklücke und ihre nähere Umgebung in einem Aufnahmebereich der Kamera liegt, so kann die Parklücke und deren nähere Umgebung in der Anzeige dargestellt werden. Zusätzlich können die von den Sensoren erfassten

Begrenzungen der Parklücke rechnerisch auf die bildlich erfasste Umgebung so übertragen werden, dass Symbole an diejenigen Stellen in das Bild eingeblendet werden, die den Positionen der Begrenzungen entsprechen.

Ein Ausführungsbeispiel für ein entsprechendes Anzeigebild des rückwärtigen Fahrraums nach einer erfolgten Vermessung einer Parklücke, das in der Anzeige sichtbar ist, zeigt das Kamerabild der Kamera, wobei in dem Bild ein erstes Fahrzeug und ein zweites Fahrzeug sichtbar sind, wobei sich zwischen den Fahrzeugen eine Parklücke befindet. An ihrer der Straße abgewandten Seite wird die Parklücke von einem Bordstein begrenzt. In das Anzeigebild ist ein erstes Symbol zur Darstellung dieser erfassten, seitlichen Begrenzung der Parklücke in Form einer gestrichelten, auf den Boden der Fahrbahn projizierten Linie dargestellt. Die Begrenzung wird dabei anhand von Reflexionen bestimmt, die von dem Bordstein zurückgeworfen und von den Sensoren empfangen werden. Ferner ist ein zweites Symbol dargestellt, dass eine Eckenbegrenzung der Parklücke durch das zweite Fahrzeug bezeichnet. Das Symbol ist dabei als ein senkrecht zur Straße verlaufender Strich dargestellt. Ein zweites Symbol bezeichnet diejenige Ecke der Parklücke, die straßenseitig durch das erste Fahrzeug definiert ist. Das zweite Symbol weist hierzu bevorzugt eine Ausgestaltung entsprechend dem ersten Symbol auf. In einer weiteren Ausführungsform ist eine zweite Linienbegrenzung in das Anzeigenbild eingetragen, die die beiden Eckensymbole bzw., sollten diese Symbole nicht dargestellt werden, deren entsprechende Positionen miteinander verbindet.

In einer weiteren Ausführungsform kann auch eine hintere Begrenzung der Parklücke zu dem zweiten Fahrzeug als ein Symbol in Form einer gepunkteten Linie dargestellt sein. Entsprechend kann auch eine vordere Begrenzung der Parklücke zu dem ersten Fahrzeug, hier als eine gepunktete Linie, in der Anzeige dargestellt werden. Statt gepunkteter oder gestrichelter Linien, wie in dem hier gezeigten Ausführungsbeispiel, können auch durchgezogene Linien oder Balken in die Anzeigendarstellung eingeblendet werden. In einer weiteren Ausführungsform kann auch eine Zielposition des Fahrzeugs nach einem Einparkvorgang in das Anzeigenbild eingetragen werden, hier als eine schraffierte Fläche dargestellt. Stattdessen oder ergänzend kann auch eine Einpärktrajektorie, hier dargestellt durch seitliche Begrenzungslinien , in das Anzeigebild eingeblendet werden.

In einer weiteren Ausführungsform können in der Anzeige auch nur eine oder mehrere erfasste Ecken der Parklücke dargestellt werden, ohne Linien zwischen den Ecken darzustellen. Hierbei werden beispielsweise Symbole für eine Eckendarstellung senkrecht zur Fahrbahn ausgerichtet, sodass entsprechende Symbole für den Fahrer besonders gut einer Position auf der Fahrbahn zuordbar sind.

In der hier dargestellten Ausführungsform sind teilweise Begrenzungslinien derartig perspektivisch in das Anzeigebild eingetragen, dass sie von dem ersten Fahrzeug verdeckt werden. In einer weiteren Ausführungsform ist es auch möglich, entsprechend einer perspektivischen Verdeckung, diese Begrenzungslinien in dem verdeckten Bereich auszublenden.

In dem hier gezeigten Ausführungsbeispiel wurden die Parklückenbegrenzungen hinsichtlich der Ecken der Fahrzeuge korrekt erfasst. Ebenso die vordere und die hintere Begrenzung der Parklücke sowie die aus den Fahrzeugkonturen bzw. den Fahrzeugecken extrapolierte straßenseitige Begrenzung der Parklücke. In einer anderen Ausführungsform ist es aber auch möglich, dass beispielsweise die zweite Ecke des Fahrzeugs zu weit von der tatsächlichen Fahrzeugecke entfernt erfasst wird. Ein entsprechendes Symbol ist gestrichelt dargestellt. In einer ersten Ausführungsform kann der Fahrer nun diese Fehlerfassung ignorieren und dennoch in eine Parklücke hineinfahren. In einer anderen Ausführungsform kann er jedoch über ein Bedienelement, das beispielsweise als ein Drehgeber oder eine Wipptaste ausgeführt ist, die Position der Fahrzeugecke und damit das Symbol in Pfeilrichtung verschieben, bis das Symbol an der für ihn sichtbaren Eckenposition entsprechend der Position des Eckensymbols positioniert ist. Gegebenenfalls kann auch entsprechend in eine Pfeilrichtung die Begrenzungslinie verschoben werden. Eine Verschiebung der Begrenzungen erfolgt dabei beispielsweise derart, dass über das Bedienelement zunächst eine der Begrenzungen angewählt wird und nach einer Auswahl einer der Begrenzungen über das Selbe oder ein anderer Bedienelement eine ausgewählte Begrenzung in ihrer Position in der Anzeige verschoben wird. Die Verschiebung der Begrenzung wirkt sich dabei bevorzugt nicht nur auf die Anzeige aus, sondern wird auch rechnerisch in das Umgebungsmodel durch die Steuereinrichtung eingerechnet. Die Steuereinrichtung vergleicht dabei die Abmaße der sich nach der Korrektur ergebenen Parklücke mit den Abmaßen des Fahrzeugs, die in einem Speicher in der Steuereinrichtung beispielsweise abgelegt sind. Ist nach der Korrektur die Parklücke für einen sicheren Einparkvorgang zu klein, so wird eine Warnung beispielsweise über eine akustische Warneinheit oder über die Anzeige ausgegeben.

Ist eine Korrektur der Begrenzungen durchgeführt worden, kann der Benutzer einen Abschluss der Korrektur über das Bedienelement bestätigen. In einer Ausführungsform der vorliegenden Erfindung wird in Anschluss eine Berechnung einer Einparktrajektorie ausgehend von der aktuellen Position des Fahrzeugs zu einer Zielposition innerhalb der Parklücke unter Berücksichtigung der korrigierten Begrenzungen der Parklücke neu bestimmt. In einer weiteren Ausführungsform kann auch die Position der Zielparklücke innerhalb der Begrenzungen der Parklücke positioniert werden. Erreicht die Zielposition der Parklücke eine dargestellte Begrenzung oder überschreitet diese, kann in einer weiteren Ausführungsform eine Warnung an den Fahrer ausgegeben werden.

Würde sich die Fahrzeugecke des Fahrzeugs tatsächlich an der Position des ersten Symbols befinden, wäre in dem oben beschriebenen Anzeigebild erkennbar, dass dann das Symbol innerhalb der durch die seitlichen Begrenzungslinien gekennzeichneten Trajektorie des Fahrzeugs für den Einparkvorgang liegen würden. Ein Einparken wäre dann nicht möglich. Nach einer Korrektur entsprechend einer Verschiebung an die Position gemäß dem Symbol dem oben beschriebenen Anzeigebild kann der Einparkvorgang jedoch wie geplant durchgeführt werden.

## Patentansprüche

1. Steuereinrichtung für eine Anzeige, mit einer Schnittstelle zu einer Kamera zur Erfassung eines Bildes eines Fahrraums eines Fahrzeugs, mit einer Schnittstelle zu wenigstens einem Sensor, zur Erfassung wenigstens einer Begrenzung einer Parklücke und mit einer Recheneinheit zur Zuordnung der Position der wenigstens einen erfassten Begrenzung der Parklücke zu einer Position in dem erfassten Bild des Fahrraums und zur Einblendung wenigstens eines Symbols zur Darstellung der erfassten Begrenzung der Parklücke in dem Bild des Fahrraums des Fahrzeugs, wobei eine Schnittstelle zu einer Eingabeeinheit zur Korrektur der wenigstens einen erfassten Begrenzung der Parklücke vorgesehen ist.

2. Steuereinrichtung nach Anspruch 2, **gekennzeichnet durch** eine Schnittstelle zu einer Ausgabeeinheit zur Ausgabe einer Warnung für den Fall, dass die Abmaße der korrigierten, erfassten Parklücke wenigstens eine vorgegebene Grenze unterschreitet.

3. Steuereinrichtung nach einem der vorhergehenden Ansprüche, **dadurch gekennzeichnet, dass** zur Darstellung einer erfassten seitlichen Begrenzung einer Parklücke jeweils eine Linie auf eine Fahrbahn in dem erfassten Bild des Fahrraums projiziert dargestellt ist.

4. Steuereinrichtung nach einem der vorhergehenden Ansprüche, **dadurch gekennzeichnet, dass** zur Darstellung einer Ecke der erfassten Parklücke die Ecke durch ein Symbol hervorgehoben ist

5. Steuereinrichtung nach einem der vorhergehenden Ansprüche, **dadurch gekennzeichnet, dass** die Kamera auf einen rückwärtigen Fahrraum des Fahrzeugs gerichtet ist.

6. Steuereinrichtung nach einem der vorhergehenden Ansprüche, **dadurch gekennzeichnet, dass** in der Anzeige zusätzlich zu dem wenigstens einen Symbol eine Zielposition einer berechneten Einparktrajektorie zu der Zielposition und/oder die Einparktrajektorie dargestellt ist.

7. Verfahren zur Darstellung einer Parklücke, wobei wenigstens eine Begrenzung der Parklücke von wenigstens einem Sensor erfasst wird, wobei die Parklücke von einer Kamera erfasst wird und die erfasste Parklücke in einer Anzeige dargestellt wird, **dadurch gekennzeichnet, dass** wenigstens ein Symbol zur Darstellung der wenigstens einen erfasste Begrenzung der Parklücke in das erfasste Bild zur Bezeichnung der Position der erfassten Begrenzung der Parklücke eingeblendet wird, wobei mittels einer Schnittstelle zu einer Eingabeeinheit (16) eine Korrektur der wenigstens einen erfassten Begrenzung der Parklücke durchgeführt wird.

8. Verfahren nach Anspruch 8, **dadurch gekennzeichnet, dass** eine Einparktrajektorie in die Parklücke unter Berücksichtigung der wenigstens einen erfassten Begrenzung oder unter Berücksichtigung einer korrigierten erfassten Begrenzung der Parklücke berechnet wird.

9. Verfahren nach einem der Ansprüche 8-9, **dadurch gekennzeichnet, dass** zur Darstellung einer erfassten Begrenzung der Parklücke jeweils wenigstens eine Linie in die Anzeige dargestellt wird.

## Claims

1. Control device for a display, comprising an interface with a camera for capturing an image of a driving space of a vehicle, comprising an interface with at least one sensor for sensing at least one boundary of a parking space and having a computing unit for assigning the position of the at least one sensed boundary of the parking space to a position in the captured image of the driving space, and for including at least one symbol for representing the sensed boundary of the parking space in the image of the driving space of the vehicle, wherein an interface with an input unit is provided for correcting the at least one sensed boundary of the parking space.

2. Control device according to Claim 2, **characterized by** an interface with an output unit for outputting a warning in the event of the dimensions of the corrected sensed parking space undershooting at least one predefined limit.

3. Control device according to one of the preceding claims, **characterized in that** in each case a line is represented projected onto a carriageway in the captured image of the driving space in order to represent a sensed lateral boundary of a parking space.

4. Control device according to one of the preceding claims, **characterized in that** in order to represent a corner of the sensed parking space, the corner is highlighted by a symbol.

5. Control device according to one of the preceding claims, **characterized in that** the camera is directed to a driving space behind the vehicle.

6. Control device according to one of the preceding claims, **characterized in that** in addition to the at least one symbol, a target position of a calculated parking trajectory to the target position and/or the parking trajectory are/is represented on the display.

7. Method for representing a parking space, wherein at least one boundary of the parking space is sensed by at least one sensor, wherein the parking space is captured by a camera and the captured parking space is represented on a display, **characterized in that** at least one symbol for representing the at least one sensed boundary of the parking space is included in the captured image in order to denote the position of the sensed boundary of the parking space, wherein the at least one sensed boundary of the parking space is corrected by means of an interface with an input unit (16).

8. Method according to Claim 8, **characterized in that** a parking trajectory into the parking space is calculated taking into account the at least one sensed boundary or taking into account a corrected sensed boundary of the parking space.

9. Method according to either of Claims 8 and 9, **characterized in that** in each case at least one line is represented on the display in order to represent a sensed boundary of the parking space.

## Revendications

1. Dispositif de commande pour un affichage, comprenant une interface avec une caméra pour acquérir une image d'un espace de déplacement d'un véhicule, comprenant une interface avec au moins un capteur pour détecter au moins une délimitation d'un emplacement de stationnement et comprenant une unité de calcul pour affecter la position de l'au moins une délimitation détectée de l'emplacement de stationnement à une position dans l'image acquise de l'espace de déplacement et pour incruster au moins un symbole pour représenter la délimitation détectée de l'espace de stationnement dans l'image de l'espace de déplacement du véhicule, une interface avec une unité de saisie pour la correction de l'au moins une délimitation détectée de l'emplacement de stationnement étant prévue.

2. Dispositif de commande selon la revendication 2, **caractérisé par** une interface avec une unité de sortie pour délivrer un avertissement dans le cas où les dimensions de l'emplacement de stationnement détecté corrigé sont inférieures à au moins une limite prédéfinie.

3. Dispositif de commande selon l'une des revendications précédentes, **caractérisé en ce que** pour représenter une délimitation latérale détectée d'un emplacement de stationnement, une ligne est à chaque fois représentée projetée sur une chaussée dans l'image acquise de l'espace de déplacement.

4. Dispositif de commande selon l'une des revendications précédentes, **caractérisé en ce que** pour représenter un coin de l'emplacement de stationnement détecté, le coin est mis en valeur par un symbole.

5. Dispositif de commande selon l'une des revendications précédentes, **caractérisé en ce que** la caméra est orientée sur un espace de déplacement arrière du véhicule.

6. Dispositif de commande selon l'une des revendications précédentes, **caractérisé en ce qu'**une position de destination d'une trajectoire d'entrée en stationnement calculée vers la position de destination et/ou la trajectoire d'entrée en stationnement est représentée dans l'affichage en plus de l'au moins un symbole.

7. Procédé pour représenter un emplacement de stationnement, au moins une délimitation de l'emplacement de stationnement étant détectée par au moins un capteur, l'emplacement de stationnement étant acquis par une caméra et l'emplacement de stationnement acquis étant représenté dans un affichage, **caractérisé en ce qu'**au moins un symbole destiné à représenter l'au moins une délimitation détectée de l'emplacement de stationnement est incrusté dans l'image acquise pour désigner la position de la délimitation détectée de l'emplacement de stationnement, une correction de l'au moins une délimitation détectée de l'emplacement de stationnement étant effectuée au moyens d'une interface avec une unité de saisie (16).

8. Procédé selon la revendication 8, **caractérisé en ce qu'**une trajectoire d'entrée en stationnement dans l'emplacement de stationnement est calculée en tenant compte de l'au moins une délimitation détectée ou en tenant compte d'une délimitation détectée corrigée de l'emplacement de stationnement.

9. Procédé selon l'une des revendications 8 et 9, **caractérisé en ce qu'**au moins une ligne est représentée à chaque fois dans l'affichage pour représenter une délimitation détectée de l'emplacement de stationnement.
